Europäisches Patentamt

European Patent Office

Office européen des brevets

(19)

(11) Veröffentlichungsnummer : **0 128 513
B1**

(12) **EUROPÄISCHE PATENTSCHRIFT**

(45) Veröffentlichungstag der Patentschrift :
28.09.88

(51) Int. Cl.⁴ : **G 01 V 9/04**

(21) Anmeldenummer : 84106428.0

(22) Anmeldetag : 05.06.84

(54) Türsicherungs-Lichtschranke.

(30) Priorität : 07.06.83 DE 3320528

(43) Veröffentlichungstag der Anmeldung :
19.12.84 Patentblatt 84/51

(45) Bekanntmachung des Hinweises auf die Patenterteilung : 28.09.88 Patentblatt 88/39

(84) Benannte Vertragsstaaten :
AT CH DE FR IT LI NL

(56) Entgegenhaltungen :
FR-A- 2 329 835
GB-A- 2 022 820
US-A- 3 842 257

(73) Patentinhaber : Erwin Sick GmbH Optik-Elektronik
Sebastian-Kneipp-Strasse 1
D-7808 Waldkirch (DE)

(72) Erfinder : Anselment, Christoph
Kreuzstrasse 23
D-7808 Waldkirch 2 (DE)
Erfinder : Sackmann, Karl-Hans
Freiburgerstrasse 31
D-7808 Waldkirch (DE)

(74) Vertreter : Dipl.-Phys.Dr. Manitz Dipl.-Ing., Dipl.-
Wirtsch. Finsterwald Dipl.-Ing. Grämkow Dipl.-
Chem.Dr. Heyn Dipl.-Phys. Rotermund
Morgan, B.Sc.(Phys.) Robert-Koch-Strasse 1
D-8000 München 22 (DE)

## Beschreibung

Die Erfindung betrifft eine Türsicherungs-Lichtschranke nach dem ersten Teil des Patentanspruchs 1.

Eine derartige Türsicherungs-Lichtschranke ist aus der DE-A-2 548 465 bekannt. Sie wird im allgemeinen an der Mittelstange der Türöffnung eines öffentlichen Verkehrsmittels angebracht, und sendet Lichtstrahlen durch die beiden Öffnungshälften zu an deren Rand angeordneten Retroreflektoren. Die Anordnung der Spiegel an einem Universalgelenk ist deswegen von Vorteil, weil hierdurch die Lichtstrahlen optimal auf die Retroreflektoren ausgerichtet werden können. Die Lichtquellen und Fotoempfänger sowie die Linsen der einzelnen Lichtsender der bekannten Türsicherungs-Lichtschranke sind zu einzelnen Baugruppen zusammengefaßt und innerhalb des Gehäuses auf einem Grundkörper angeordnet. Tritt bei der vorbekannten Türsicherungs-Lichtschranke ein Defekt auf, so muß im allgemeinen die gesamte Lichtschranke einschließlich Optik und Gehäuse ausgewechselt werden.

Es ist auch schon eine Lichtschranke mit Lichtsender und Lichtempfänger bekannt (GB-A-2 022 820), welche jedoch nur einen Lichtsender und einen Lichtempfänger aufweist und grundsätzlich auch für eine Türsicherung angewendet werden könnte. In der einen Hälfte eines zweiteiligen Gehäuses befindet sich eine Leiterplatte, deren äußerer Umriß dem Innenumriß der einen Gehäusehälfte entspricht und welche die Elektronik und die optischen Bauteile trägt. Die Leiterplatte ist senkrecht zu den optischen Achsen von Lichtsender und Lichtempfänger in die eine Gehäusehälfte einsetzbar bzw. aus dieser herausnehmbar. Abgesehen davon, daß der auf der Leiterplatte angebrachte Lichtsender-Empfänger erst durch den Zusammenbau mit den Gehäusehälften endgültig justiert wird, läßt sich diese Baugruppenbauweise nicht auf eine Türsicherungs-Lichtschranke mit zwei Lichtsender-Empfängern anwenden, ohne daß die Zugänglichkeit der optischen Bauelemente sowohl bei der Vorjustierung außerhalb des Gehäuses als auch innerhalb des Gehäuses beeinträchtigt wird.

Das Ziel der vorliegenden Erfindung besteht somit darin, eine Zielsicherungs-Lichtschranke der eingangs genannten Gattung zu schaffen, bei der nicht mehr das gesamte Gerät im Falle eines Defektes ausgetauscht werden muß und durch gute Zugänglichkeit die optischen Bauelemente zum Teil auch außerhalb des Gehäuses justiert werden können und diese Justierung nach dem Zusammenbau auch beibehalten bleibt.

Zur Lösung dieser Aufgabe sind die Merkmale des Patentanspruchs 1 vorgesehen.

Erfindungsgemäß werden also die beiden Optikbauteile der Lichtsender-Empfänger in einer einzigen austauschbaren Baueinheit zusammengefaßt, wobei die bauliche Anordnung auf einem zwischen den Lichtsender-Empfängern angeordneten Profilsockel derart gestaltet ist, daß insbesondere die Linsen der Lichtsender-Empfänger sowohl bei Anordnung auf dem Grundkörper als auch bei Anordnung auf einem entsprechenden Profilsockel außerhalb des Gehäuses zu Justierzwecken von den Seiten her ohne Störung durch die Halterung zugänglich sind. Es kann auf diese Weise außerhalb des Gehäuses bzw. des Grundkörpers eine einwandfreie Justierung der Linsen relativ zu den Lichtquellen bzw. Fotoempfängern erfolgen, welche dann nach dem Aufsetzen der Baueinheit mittels der Profilausnehmung auf den Profilkörper voll erhalten bleibt. Anschließend müssen dann nach dem Anbringen der erfindungsgemäßen Türsicherungs-Lichtschranke an der Griffstange eines Fahrzeugs lediglich noch die beiden Umlenkspiegel auf die Retroreflektoren justiert werden.

Die Ausführungsform nach Anspruch 2 gewährleistet es, daß beim Aufstecken der Baueinheit auf den Profilsockel automatisch auch die elektrischen Verbindungen hergestellt werden. Dies wird zweckmäßigerweise durch die bevorzugte Weiterbildung nach Anspruch 3 gefördert.

Die Weiterbildung nach Anspruch 4 hat den Vorteil, daß die elektrische Verbindung zu dem im Fahrzeug befindlichen Türsteuergerät von einem Monteur hergestellt werden kann, ohne daß das Gehäuse geöffnet werden muß.

Die Ausführungsform nach Anspruch 5 führt zu einer besonders kompakten Anordnung der Elektronik hinter den optischen Bauelementen und der Profilausnehmung.

Im Lichtsender wird bevorzugt eine Rotlichtdiode als Lichtquelle verwendet. Weiter weist die Türsicherungs-Lichtschranke zwei Relaisausgänge für eine getrennte Türsteuerung innerhalb der beiden Lichtschrankenstrahlen auf. Die Lichtschranke weist weiter zwei Anzeigedioden auf, die das Justieren der Spiegel auf dem Reflektor der Tür erleichtern.

Die Erfindung wird im folgenden beispielsweise anhand der Zeichnung beschrieben; in dieser zeigt:

Figur 1 eine Stirnansicht der die beiden Lichtsender-Empfänger mit der dazugehörigen Elektronik enthaltenden Baueinheit,

Figur 2 eine Seitenansicht des Gegenstandes der Fig. 1,

Figur 3 eine der Fig. 1 entsprechende Stirnsicht des Grundkörpers, an dem die Baueinheit nach den Fig. 1, 2 montierbar ist,

Figur 4 die Rückansicht des Gegenstandes der Fig. 3,

Figur 5 eine Stirnansicht auf die schmale Seite des Grundkörpers nach den Fig. 3 und 4 und

Figur 6 einen Schnitt analog der Ansicht nach Fig. 1 zur Veranschaulichung der Profilausnehmung der Baueinheit nach den Fig. 1, 2.

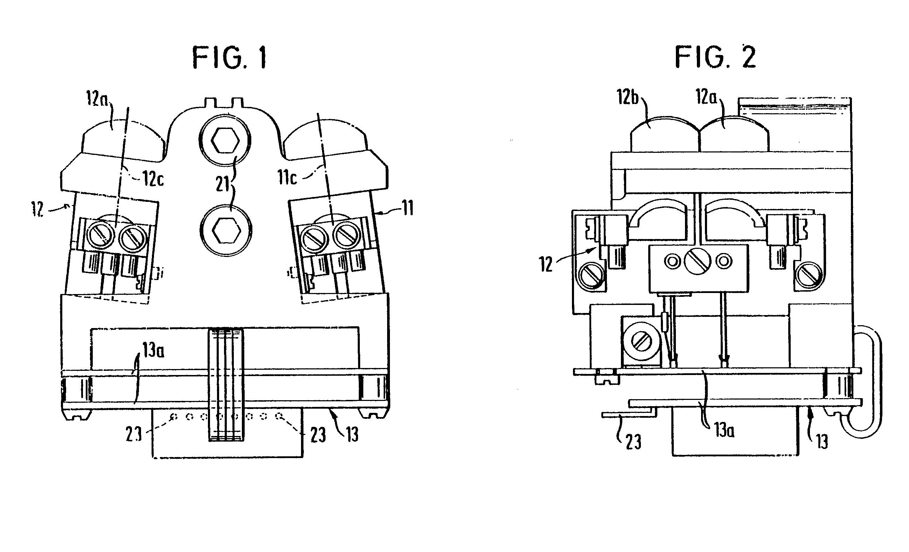

Nach den Fig. 1 und 2 weist eine an einem Gußteil montierte Baueinheit zwei nebeneinander angeordnete Lichtsender-Empfänger 11, 12 auf, von denen jeder nebeneinander einen Lichtsendeteil und einen Lichtempfangsteil aufweist. In Fig. 2 sind das Lichtsendeteil 12a und das Lichtempfangsteil 12b des Lichtsender-Empfängers 12 schematisch wiedergegeben.

Die optischen Achsen 11c bzw. 12c der Lichtsender-Empfänger 11, 12 sind in der aus Fig. 1 ersichtlichen Weise etwa V-förmig aufeinanderzu geneigt.

Unterhalb der Lichtsender-Empfänger 11, 12 befindet sich auf Schaltungsplatten die nur schematisch angedeutete Elektronik 13. Von der einen Platte erstreckt sich zur Seite ein zahlreiche Stifte aufweisender Stecker 23.

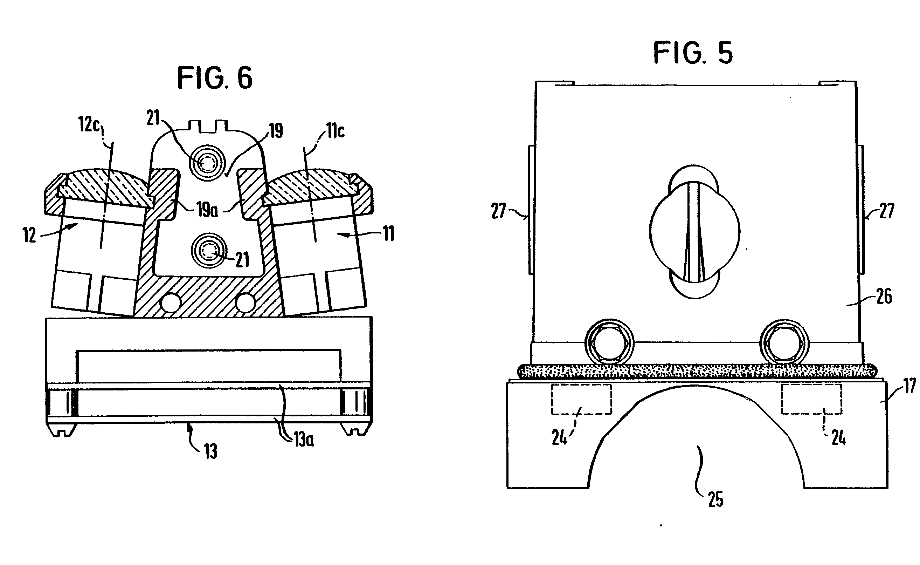

Nach Fig. 6 weist die Baueinheit zwischen den Lichtsender-Empfängern 11, 12 eine Profilvertiefung 19 auf, die sich im wesentlichen horizontal und senkrecht zu der durch die optischen Achsen 11c, 12c gebildeten Ebene erstreckt. In die Profilvertiefung 19 ragen von oben Schraubbolzen 21 (Fig. 1) hinein.

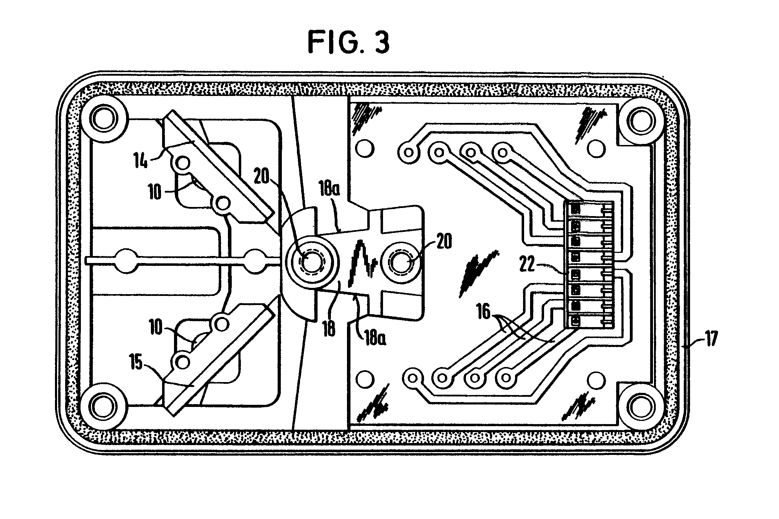

Der Grundkörper 17 der erfindungsgemäßen Türsicherungs-Lichtschranke weist nach Fig. 3 im Bereich seiner Mitte einen sich senkrecht zu der durch die optischen Achsen 11c, 12c gebildeten Ebene erstreckenden Profilsockel 18 auf, in dem übereinander zwei Befestigungsgewindebohrungen 20 vorgesehen sind. Das Profil des Profilsockels 18 ist mit der Profilausnehmung 19 (Fig. 6) der Baueinheit nach den Fig. 1, 2 so abgestimmt, daß eine gute Führung zum Aufsetzen des Optikträgers auf das Gehäuse erzielt wird. Der eigentliche Paßsitz wird durch die Zentrierhülsen-Ansätze erreicht, welche erfindungsgemäß die Bohrungen 20 (Fig. 3) und die die Befestigungsbolzen 21 (Fig. 6) aufnehmenden Bohrungen umgeben und in der dargestellten Weise komplementär zueinander ausgebildet sind.

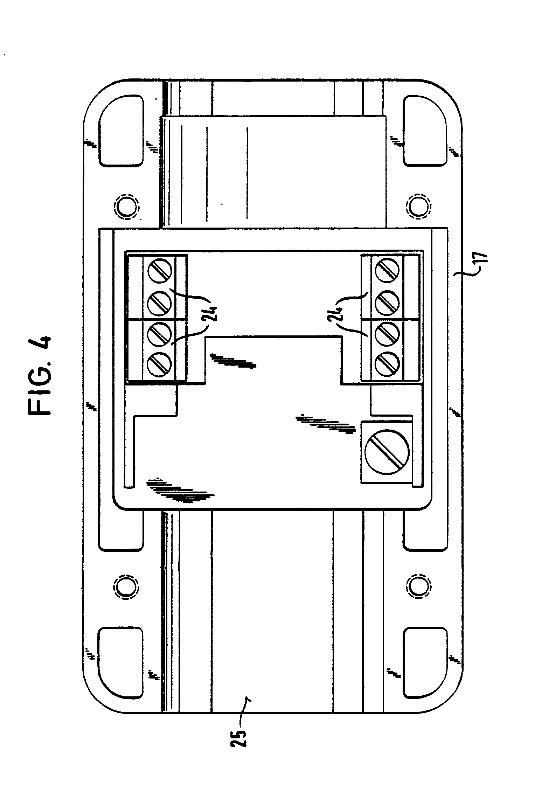

Gegenüber dem Stiftstecker 23 der Baueinheit nach den Fig. 1, 2 befindet sich im Grundkörper 17 nach Fig. 3 eine Steckerbuchse 22, welche über aufgedruckte Anschlußleitungen 16 zu Anschlußklemmen 24 auf der Rückseite des Grundkörpers 17 (Fig. 4) führen.

Während sich die Steckerbuchse 22 im unteren Bereich des Grundkörpers 17 befindet, trägt der Grundkörper 17 im oberen Bereich zwei Umlenkspiegel 14, 15, die in nicht im einzelnen dargestellter Weise über Universalgelenke 10 am Grundkörper 17 so befestigt sind, daß sie in allen Richtungen verschwenkt werden können. Jede erzielte Schwenkstellung kann anschließend fixiert werden. Der Profilsockel 18 befindet sich zwischen den Umlenkspiegeln einerseits und der Steckerbuchse 22 andererseits. Zur Montage wird die Baueinheit nach den Fig. 1, 2 auf den Befestigungssockel 18 aufgeschoben, worauf dann die Befestigungsbolzen 21 in die Befestigungsgewindebohrungen 20 eingeschraubt werden, bis eine feste Verbindung hergestellt ist. Nunmehr liegt eine einwandfreie Ausrichtung der Lichtsender-Empfänger 11, 12 mit den Umlenkspiegeln 14, 15 vor, wobei die genaue Richtung der abgegebenen Lichtstrahlen durch Verschwenkung der Umlenkspiegel 14, 15 eingestellt werden kann. Beim Aufsetzen der Baueinheit nach den Fig. 1, 2 werden außerdem die Stifte des Steckers 23 in die Steckerbuchse 22 selbsttätig eingesteckt, was aufgrund der geeigneten Profilierung des Profilsockels 18 und der Profilausnehmung 19 gewährleistet wird. Der Monteur braucht also zum Einstecken des Steckers 23 in die Buchse 22 keine besondere Aufmerksamkeit aufzubringen.

Fig. 5 zeigt die Ausnehmung 25, in welche die Haltestange eines öffentlichen Verkehrsmittels eingreift, an der die Türsicherungs-Lichtschranke mittels einer nicht dargestellten Schelle zu befestigen ist. Weiter zeigt Fig. 5 das Gehäuse 26, durch das der Grundkörper 17 nach dem Anbringen der Baueinheit abgeschlossen wird und welches zwei in Fig. 5 schematisch angedeutete Fenster 27 zum Austreten bzw. Eintreten der Lichtstrahlen aufweist. Erfindungsgemäß sind die elektrischen Anschlußklemmen 24 der Türsicherungs-Lichtschranke auf der der Haltestangenausnehmung 25 zugewandten Fläche des Grundkörpers 17 angeordnet, und zwar in den toten Bereichen neben der für die Aufnahme der Haltestange vorgesehenen Abrundung. Der Monteur kann so die Lichtschranke anschließen, ohne das Gehäuse 26 abnehmen zu müssen.

In Fig. 5 ist in der Mitte der Gehäusestirnwand eine annähernd kreisförmige Öffnung mit Einführungsschrägen am oberen und unteren Ende dargestellt, welche zur Aufnahme einer Trockenmitteltablette dient. Außerdem ist durch die Öffnung hindurch der senkrechte Steg zu erkennen, welcher in dem Bereich der Umlenkspiegel 14, 15 die beiden Optik-Systeme voneinander trennt und welcher auch in Fig. 3 in Draufsicht zu erkennen ist.

Im Anschluß an die in Fig. 5 erkennbare annähernd kreisförmige Öffnung weist der Mittelsteg eine der Höhe der Öffnung entsprechende annähernd rechteckförmige Ausnehmung auf, so daß die Trockentablette in beiden optischen Systemen wirksam werden kann.

## Patentansprüche

1. Türsicherungs-Lichtschranke mit zwei Lichtsender-Empfängern (11, 12) deren optische Achsen in vertikale Richtung etwa V-förmig aufeinander zu geneigt sind, und welche über an jeweils einem Universalgelenk (10) darüber aufgehängte Umlenkspiegel (14, 15) Licht nach entgegengesetzten Seiten im wesentlichen horizontal abstrahlen und nach Reflexion an jeweils einem Retroreflektor wieder empfangen, wobei ein zwei Lichtdurchtrittsfenster (27) aufweisendes Gehäuse (26) einen an einer Stange befestigbaren Grundkörper (17) teilweise umgibt, dadurch gekennzeichnet, daß der Grundkörper (17) einen senkrecht zu einer durch die optischen Achsen (11c, 12c) gebildeten Ebene stehenden Profilsockel (18) mit zwei seitlichen Nuten (18a) aufweist, der mittig zu den optischen Achsen (11a, 12a) unterhalb der beiden Umlenkspiegel (14, 15) zwischen den beiden Lichtsender-Empfängern (11, 12) angeordnet ist, und daß die beiden Lichtsender-Empfänger (11, 12) mit der dazugehörigen Elektronik (13) eine Baueinheit bilden, welche eine dem Profilsockel (18) entsprechende Profilausnehmung (19) mit in die Nuten (18a) passenden seitlichen Rippen (19a) aufweist und durch Aufschieben der Baueinheit auf den mindestens eine und vorzugsweise zwei Befestigungsgewindebohrungen (20) tragenden Profilsockel (18) und durch Einschrauben von an der Baueinheit vorgesehenen Befestigungsbolzen (21) in die Befestigungsgewindebohrungen (20) an dem die Umlenkspiegel (14, 15) und elektrischen Anschlüsse (16, 24) tragenden Grundkörper (17) lösbar befestigt und senkrecht zu der durch die optischen Achsen (11c, 12c) gebildeten Ebene von dem Grundkörper (17) abziehbar ist.

2. Türsicherungs-Lichtschranke nach Anspruch 1, dadurch gekennzeichnet, daß zwischen der Baueinheit und dem Grundkörper (17) eine elektrische Steckverbindung (22, 23) vorgesehen ist, welche senkrecht zu der durch die optischen Achsen (11c, 12c) gebildeten Ebenen lösbar ist.

3. Türsicherungs-Lichtschranke nach Anspruch 2, dadurch gekennzeichnet, daß auf dem Grundkörper (17) im Abstand von dem Befestigungssockel (18) eine Steckerbuchse (22) und an der Baueinheit an komplementärer Stelle ein Stecker (23) angeordnet sind.

4. Türsicherungs-Lichtschranke nach einem der vorhergehenden Ansprüche, dadurch gekennzeichnet, daß elektrische Anschlußklemmen (24) außerhalb des Innenraumes des Gehäuses (26) im Bereich der Stangenbefestigungsseite angeordnet sind.

5. Türsicherungs-Lichtschranke nach einem der vorhergehenden Ansprüche, dadurch gekennzeichnet, daß die Elektronik (13) Leiterplatten (13a) aufweist, die sich im wesentlichen senkrecht zu der Winkelhalbierenden der beiden optischen Achsen (11c, 12c) erstrecken.

## Claims

1. Light barrier for door security comprising two light transmitter receivers (11, 12) the optical axes of which are inclined in the vertical direction in approximately V-shaped manner to one another, and which radiate light to opposite sides via deflecting mirrors (14, 15) suspended thereabove, in each case on a respective universal joint (10), and receive the light again after reflection at a respective retroreflector in each case, wherein a housing (26) having two light transmitting windows (27) partly surrounds a basic body (17) which is securable to a bar, characterized in that the basic body (17) has a profiled pedestal (18) extending perpendicular to a plane formed by the optical axes (11c, 12c), with the profiled pedestal (18) having two side grooves (18a) and being arranged centrally relative to the optical axes (11a, 12a) beneath the two deflecting mirrors (14, 15) between the two light transmitter-receivers (11, 12) ; and in that the two light transmitter-receivers (11, 12) with the associated electronics (13) form a constructional unit which has a profiled recess (19) corresponding to the profiled pedestal (18), with side ribs (19a) which fit into the grooves (18a), and can be releasably secured to the basic body (17) carrying the deflecting mirrors (14, 15) and electrical connections (16, 24) by sliding the constructional unit onto the profiled pedestal (18), which has at least one and preferably two threaded mounting bores (20), and by screwing mounting bolts (21) provided on the constructional unit into the threaded mounting bores (20), and wherein the constructional unit is extractable at right angles to the plane of the basic body (17) formed by the optical axes (11c, 12c).

2. Light barrier for door security in accordance with claim 1, characterized in that an electrical plug connector (22, 23) is provided between the constructional unit and the basic body (17), with the plug connector being releasable perpendicular to the plane formed by the optical axes (11c, 12c).

3. Light barrier for door security in accordance with claim 2, characterized in that a plug socket (22) is arranged on the basic body (17) spaced from the mounting pedestal (18), and a plug (23) is arranged at a complementary position on the constructional unit.

4. Light barrier for door security in accordance with one of the preceding claims, characterized in that electrical connection terminals (24) are arranged outside of the inner space of the housing (26) in the region of the bar mounting side.

5. Light barrier for door security in accordance with one of the preceding claims, characterized in that the electronics (13) has circuit boards (13a) which extend substantially perpendicular to the angular bisector of the two optical axes (11c, 12c).

## Revendications

1. Barrière optique de protection d'une porte équipée de deux émetteurs-récepteurs de lumière (11, 12) dont les axes optiques sont inclinés l'un sur l'autre approximativement en forme de V dans le sens vertical, et qui, par l'intermédiaire de miroirs de renvoi (14, 15) suspendus au-dessus à une articulation à rotule (10), rayonnent sensiblement horizontalement de la lumière vers des côtés opposés et après réflexion, reçoivent à nouveau celle-ci sur un rétroréflecteur, un boîtier (26), comportant deux fenêtres (27) de passage de lumière, entourant partiellement une embase (17), caractérisée en ce que l'embase (17) présente un socle profilé (18) avec deux rainures latérales (18a) se trouvant dans un plan formé par les axes optiques (11c, 12c), qui est disposé centralement par rapport aux axes optiques (11a, 12a) au-dessous de deux miroirs de renvoi (14, 15) entre les deux émetteurs-récepteurs de lumière (11, 12), et en ce que les deux émetteurs-récepteurs de lumière (11, 12) forment avec l'électronique associée (13) une unité structurale, qui comporte un évidement profilé (19) correspondant au socle profilé (18) avec des nervures latérales (19a) s'adaptant dans les rainures (18a) et par mise en place de l'unité structurale sur le socle profilé (18) portant au moins un et de préférence deux alésages taraudés de fixation (20) et par vissage de boulons de fixation (21) prévus sur l'unité structurale dans les alésages taraudés de fixation (20), peut être fixée de façon amovible à l'embase (17) portant les miroirs de renvoi (14, 15) et des connexions électriques (16, 24), et peut être extraite de l'embase (17) perpendiculairement au plan formé par les axes optiques (11c, 12c).

2. Barrière optique de protection de porte selon la revendication 1, caractérisée en ce qu'entre l'unité structurale et l'embase (17) est prévue une liaison électrique enfichable (22, 23), qui peut être détachée perpendiculairement au plan formé par les axes optiques (11c, 12c).

3. Barrière optique de protection de porte selon la revendication 2, caractérisée en ce que sur l'embase (17) sont disposées, espacées du socle de fixation (18), un connecteur femelle (22) et, sur l'unité structurale en un endroit complémentaire, un connecteur mâle (23).

4. Barrière optique de protection de porte selon une des revendications précédentes, caractérisée en ce que des bornes de connexion électrique (24) sont disposées à l'extérieur de l'espace interne du boîtier (26) à proximité du côté de fixation des tiges.

5. Barrière optique de protection de porte selon une des revendications précédentes, caractérisée en ce que l'électronique (13) comporte des plaques de circuit imprimé (13a) qui s'étendent sensiblement perpendiculairement à la bissectrice des deux axes optiques (11c, 12c).

## FIG. 1

## FIG. 2

0 128 513

FIG. 3

# FIG. 4

25

24

24

17

FIG. 6

FIG. 5

0 128 513